(19) Europäisches Patentamt
European Patent Office
Office européen des brevets

(11) EP 2 011 810 A1

(12) **EUROPEAN PATENT APPLICATION**
published in accordance with Art. 153(4) EPC

(43) Date of publication:
**07.01.2009 Bulletin 2009/02**

(21) Application number: **07741902.6**

(22) Date of filing: **18.04.2007**

(51) Int Cl.:
***C08G 64/06** (2006.01)*

(86) International application number:
**PCT/JP2007/058466**

(87) International publication number:
**WO 2007/123162 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.04.2006 JP 2006116905**
**30.03.2007 JP 2007092112**

(71) Applicant: **Mitsubishi Chemical Corporation**
**Minato-ku**
**Tokyo 108-0014 (JP)**

(72) Inventors:
- **MIYAMOTO, Masaaki**
**Kitakyushu-shi**
**Fukuoka 806-0004 (JP)**
- **TSURUHARA, Kenji**
**Kitakyushu-shi**
**Fukuoka 806-0004 (JP)**
- **SHIRAISHI, Yoshitaka**
**Kitakyushu-shi**
**Fukuoka 806-0004 (JP)**
- **UCHIMURA, Ryuuji**
**Kitakyushu 806-0004 (JP)**

(74) Representative: **Vossius & Partner**
**Siebertstraße 4**
**81675 München (DE)**

(54) **POLYCARBONATE RESIN**

(57) The object of the present invention is to provide a polycarbonate resin having an extremely narrow molecular weight distribution, good flowability when melting, and particularly extremely good flowability when melting that does not depend on shear rate. The present invention relates to a polycarbonate resin, **characterized in that** a value obtained by dividing difference between a logarithmic value log $MV_{9.12}$ of a melt viscosity (Pa·s) measured at shear rate of 9.12 $sec^{-1}$ and a logarithmic value log $MV_{1624}$ of a melt viscosity (Pa·s) measured at shear rate of 1824 $sec^{-1}$, with a capillary rheometer having a die diameter of 1 mmϕ and an effective length of 30 mmL, by a viscosity average molecular weight Mv calculated by the following equations, viscosity difference/molecular weight ratio, is $2.0\times10^{-5}$ or less.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).

EP 2 011 810 A1

## Description

### Technical Field

The present invention relates to a polycarbonate resin having a molecular weight distribution close to monodispersion and extremely excellent flowability when melting.

### Background Art

As conventionally known, a polycarbonate resin is widely used as a forming raw material of various molded articles. For example, a substrate of an optical recording medium such as an optical disc and a magneto-optical disc is mainly produced by injection molding of a polycarbonate resin. To form such a precise product by injection molding, ultrahigh flowability is required in order that a resin smoothly flows in a mold, and the degree of demand to the flowability increases with decreasing a thickness of a product.

Conventionally, a method of producing a polycarbonate resin having a small oligomer content and a narrow molecular weight distribution has been investigated as one of methods of improving properties of a polycarbonate resin, and as such a polycarbonate resin the present inventors have previously proposed a polycarbonate resin obtained by reacting a polycarbonate raw material and a dihydroxy compound, wherein a ratio of a weight average molecular weight Mw to a number average molecular weight Mn, in terms of a polystyrene measured by gel permeation chromatography, Mw/Mn, is 2.2 or less, and a ratio of a viscosity average molecular weight Mv to a number average molecular weight Mn' calculated from the number of molecular terminals, Mv/Mn', is 1.40 or less (Japanese Patents 3720687 and 3726618).

The polycarbonate resins described in those publications are a low volatile polycarbonate resin having extremely narrow molecular weight distribution and in which a low molecular weight oligomer is not substantially present, and its flowability is excellent. However, it cannot say to be sufficient in ultrahigh flowability required in molding a thin and precise injection molded product, particularly flowability which does not depend on shear rate, and therefore, its improvement has been desired.

Patent Document 1: Japanese Patent 3720687
Patent Document 2: Japanese Patent 3726618

### Disclosure of the Invention

### Problems that the Invention is to Solve

The present invention has an object to provide a polycarbonate resin having an extremely narrow molecular weight distribution, good flowability when melting, and particularly extremely good flowability when melting that does not depend on shear rate.

### Means for Solving the Problems

As a result of keen investigations to solve the above problems, the present inventors have found that a polycarbonate resin having small shear rate dependency of a logarithmic value of a melt viscosity (Pa·s) to a viscosity average molecular weight, or a polycarbonate resin having a given substituent introduced into a molecular end and having extremely narrow molecular weight distribution shows good flowability when melting that does not depend on shear rate, and have completed the present invention.

Specifically, the present invention has the following gist.

[1] A polycarbonate resin, characterized in that a value obtained by dividing difference between a logarithmic value log $MV_{9.12}$ of a melt viscosity (Pa·s) measured at shear rate of 9.12 $sec^{-1}$ and a logarithmic value log $MV_{1824}$ of a melt viscosity (Pa·s) measured at shear rate of 1824 $sec^{-1}$, with a capillary rheometer having a die diameter of 1 mmϕ and an effective length of 30 mmL, by a viscosity average molecular weight Mv calculated by the following equations (hereinafter referred to as "viscosity difference/molecular weight ratio": (log $MV_{9.12}$ - log $MV_{1824}$)/Mv is $2.0\times10^{-5}$ or less.

Measurement temperature of a melt viscosity in the present invention is not particularly limited so far as it is a temperature at which the polycarbonate resin melts. However, the melt viscosity at the above-described specific shear rate must be a value measured at the same temperature.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).

[2] The polycarbonate resin in [1], characterized in that the viscosity diffenence/molecular weight ratio: (log $MV_{9.12}$ - log $MV_{1824}$)/Mv is $1.6\times10^{-5}$ or less.

[3] The polycarbonate resin in [2], characterized in that the viscosity difference/molecular weight ratio: (log $MV_{9.12}$ - log $MV_{1824}$)/Mv is $1.0\times10^{-5}$ or less.

[4] A polycarbonate resin, characterized in that it is a polycarbonate resin obtained by reacting a carbonate raw material and a dihydroxy compound, and is satisfied with the following requirements 1) to 4).

1) It has R-CO- group or R'-O-CO- group (R and R' each shows an organic group) at a molecular end, and OH ends occupy less than 50% of the whole end groups.
2) The sum of the residual amounts of an end modifier and an acid anhydride of the end modifier is 20 ppm or less.
3) A ratio of a weight average molecular weight Mw to a number average molecular weight Mn, in terms of a polystyrene measured by gel permeation chromatography: Mw/Mn is 1.45 or less.
4) A ratio of a viscosity average molecular weight Mv calculated by the following equation to a number average molecular weight Mn' calculated from the number of molecular ends: Mv/Mn' is 1.40 or less.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).

[5] The polycarbonate resin in any one of [1] to [3], characterized in that it is a polycarbonate resin obtained by reacting a carbonate raw material and a dihydroxy compound, and is satisfied, with the following requirements 1) to 4).

1) It has R-CO- group or R'-O-CO- group (R and R' each shows an organic group) at a molecular end, and OH ends occupy less than 50% of the whole end groups.
2) The sum of the residual amounts of an end modifier and an acid anhydride of the end modifier is 20 ppm or less.
3) A ratio of a weight average molecular weight Mw to a number average molecular weight Mn, in terms of a polystyrene measured by gel permeation chromatography: Mw/Mn is 1.45 or less.
4) A ratio of a viscosity average molecular weight Mv calculated by the following equation to a number average molecular weight Mn' calculated from the number of molecular ends: Mv/Mn' is 1.40 or less.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).

[6] The polycarbonate resin in [4] or [5], characterized in that Mv/Mn' is 1.30 or less, and OH groups occupy less than 40% of the whole end groups.

[7] The polycarbonate resin in [6], characterized in that Mv/Mn' is 1.20 or less, and OH groups occupy less than 30% of the whole end groups.

[8] The polycarbonate resin in any one of [1] to [7], characterized in that the viscosity average molecular weight Mv is from 8,000 to 100,000.

Advantage of the Invention

The polycarbonate resin of the present invention is a polycarbonate resin having an extremely narrow molecular weight distribution, good flowability when melting, and particularly extremely good flowability when melting that does not depend on shear rate, and is therefore extremely industrially useful to various applications including injection molding of thin and high-precise products.

Brief Description of the Drawings

[Fig. 1] Fig. 1 is graphs showing melt curves of the polycarbonate resins produced in Example 1 and Comparative Example 1.
[Fig. 2] Fig. 2 is graphs showing melt curves of the polycarbonate resins produced in Example 2 and Comparative Example 2.
[Fig. 3] Fig. 3 is graphs showing melt curves of the polycarbonate resins produced in Example 3 and Comparative Example 3.
[Fig. 4] Fig. 4 is graphs showing melt curves of the polycarbonate resins produced in Example 4 and Comparative Example 5.

Best Mode for Carrying Out the Invention

The embodiment of the polycarbonate resin of the present invention is described in detail below.

(Polycarbonate Resin)

The polycarbonate resin of the present invention is provided with the following requirements [I] and/or [II]. The polycarbonate resin of the present invention is preferably provided with the following requirements [I] and [II] together.
[I] A value obtained by dividing difference between a logarithmic value log $MV_{9.12}$ of a melt viscosity (Pa·s) measured at shear rate of 9.12 $sec^{-1}$ and a logarithmic value log $MV_{1824}$ of a melt viscosity (Pa·s) measured at shear rate of 1824 $sec^{-1}$, with a capillary rheometer having a die diameter of 1 mmϕ and an effective length of 30 mmL, by a viscosity average molecular weight Mv calculated by the following equations (hereinafter referred to as "viscosity difference/molecular weight ratio": (log $MV_{9.12}$ - log $MV_{1824}$)/Mv is $2.0\times10^{-5}$ or less.
Measurement temperature of a melt viscosity in the present invention is not particularly limited so far as it is a temperature at which the polycarbonate resin melts. However, the melt viscosity at the above-described specific shear rate must be a value measured at the same temperature.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).
[II] It is obtained by reacting a carbonate raw material and a dihydroxy compound, and is satisfied with the following requirements 1) to 4).

1) It has R-CO- group or R'-O-CO- group (R and R' each shows an organic group) at a molecular end, and OH ends occupy less than 50% of the whole end groups.
2) The sum of the residual amounts of an end modifier and an acid anhydride of the end modifier is 20 ppm or less.
3) A ratio of a weight average molecular weight Mw to a number average molecular weight Mn, in terms of a polystyrene measured by gel permeation chromatography: Mw/Mn is 1.45 or less.
4) A ratio of a viscosity average molecular weight Mv calculated by the following equation to a number average molecular weight Mn' calculated from the number of molecular ends: Mv/Mn' is 1.40 or less.

$$\eta_{sp}/C=[\eta]\times(1+0.28\eta_{sp})$$

$$[\eta]=1.23\times10^{-4}\times Mv^{0.83}$$

(In the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl).

<Viscosity difference/molecular weight ratio: (log $MV_{9.12}$ - log $MV_{1824}$)/Mv>

Here, the melt viscosity measured at shear rate of 9.12 $sec^{-1}$ shows low shear rate, and the melt viscosity measured at shear rate of 1824 $sec^{-1}$ shows high shear rate. When the difference between those is small to a viscosity average molecular weight Mv, it shows that such a resin is a resin having excellent Newtonian Flow property.

When the viscosity difference/molecular weight ratio: (log $MV_{9.12}$ - log $MV_{1824}$)/Mv is larger than $2.0\times10^{-5}$, a polycarbonate resin having an extremely narrow molecular weight distribution, good flowability when melting, and particularly extremely good flowability when melting that does not depend on shear rate, which is purposed in the present invention cannot be realized. The viscosity difference/molecular weight ratio: (log $MV_{9.12}$ - log $MV_{1824}$)/Mv is preferable as smaller. The ratio is preferable $1.6\times10^{-5}$ or less, and more preferably $1.0\times10^{-5}$ or less. The lower limit of the viscosity difference/molecular weight ratio: (log $MV_{9.12}$ - log $MV_{1824}$)/Mv is not particularly limited, but it is generally $0.5\times10^{-5}$ or more. The melt viscosity at the above-described specific shear rate must be a value measured at the same temperature.

<Ratio of weight average molecular weight Mw to number average molecular weight Mn; Mw/Mn>

The ratio of a weight average molecular weight Mw to a number average molecular weight Mn: Mw/Mn is a measure showing width of a molecular weight distribution, and a small value shows that the molecular weight distribution is narrow.

Therefore, the polycarbonate resin of the present invention has the ratio of a weight average molecular weight Mw to a number average molecular weight Mn: Mw/Mn of 1.45 or less, and preferably 1.40 or less. Where Mw/Mn exceeds 1.45, a polycarbonate resin having an extremely narrow molecular weight distribution, good flowability when melting, and particularly extremely good flowability when melting that does not depend on shear rate, which is purposed in the present invention cannot be realized. Mw/Mn is preferable as smaller. The lower limit of Mw/Mn is not particularly limited, but it is generally 1.10 or more.

<Ratio of viscosity average molecular weight Mv to number average molecular weight Mn' calculated from the number of molecular ends: Mv/Mn'>

The ratio of a viscosity average molecular weight Mv to a member average molecular weight Mn' calculated from the number of molecular ends: Mv/Mn' is also a measure showing width of a molecular weight distribution, similar to the ratio of a weight average molecular weight Mw to a number average molecular weight Mn: Mw/Mn, and its small value means that a molecular weight distribution is narrow.

Therefore, the polycarbonate resin of the present invention has the ratio of a viscosity average molecular weight Mv to a number average molecular weight Mn' : Mv/Mn' of 1.40 or less, preferably 1.30 or less, more preferably 1.20 or less, and further preferably 1.15 or less. Where Mv/Mn' exceeds 1.40, a polycarbonate resin having an extremely narrow molecular weight distribution, good flowability when melting, and particularly extremely good flowability when melting that does not depend on shear rate, which is purposed in the present invention cannot be realized. Mv/Mn' is preferable as smaller. The lower limit of Mv/Mn' is not particularly limited, but it is generally 1.05 or more.

<Proportion of OH groups at molecular ends>

The polycarbonate resin of the present invention is that OH groups occupy less than 50%, preferably less than 40%, and more preferably less than 30%, of the whole end groups.

A group introduced into the molecular ends, other than OH group is preferably a R-CO- group or a R'-O-CO- group (R and R' each represents an organic group).

Examples of an end modifier for converting into the R-CO- group include a carboxylic acid having from 1 to 30 carbon atoms, a carboxylic halide, a carboxylic anhydride, and a carboxylic ester. Of those, a carboxylic halide and a

carboxylic anhydride are preferable, and a carboxylic halide is particularly preferable. Examples of the end modifier include aliphatic and aromatic carboxylic acids such as capric acid, lauric acid, acetic anhydride, butyric anhydride, stearic chloride, palmitic bromide, myristic chloride, benzoic chloride (benzoyl chloride), toluic chloride, benzoic bromide, p-t-butylbenzoic chloride, octylbenzoic chloride, benzoic anhydride, ethyl benzoate, 1-napthylic chloride and 2-naphthylic bromide; and their reactive derivatives.

Example of an end modifier for converting into the R'-C-CO- group includes a halocarbonic ester having from 1 to 30 carbon atoms. Examples of the ester include ethyl chlorocarbonate, butyl chlorocarbonate, stearyl chlorocarbonate, phenyl chlorocarbonate (phenyl chloroformate), tolyl chlorocarbonate, naphthyl chlorocarbonate, ethyl bromocarbonate, phenyl bromocarbonate and naphthyl bromocarbonate.

Those end modifiers may be used alone or as mixtures of two or more thereof,

It is important that those end modifiers are added after completion of the polymerization reaction of from an oligomer to a polycarbonate resin. Specifically, the end modifier is added to a polycarbonate resin having end hydroxyl groups after passing a given reaction time and reaching a molecular weight to the desired value. Where the end modifier is added during the polymerization reaction, the end modifier acts like an end-terminator, and as a result, only a product having a wide molecular weight distribution such that a tail extends toward a low molecular weight region is obtained. When the end modifier is added after completion of the polymerization reaction of from an oligomer to a polycarbonate resin, an end-modified polycarbonate resin can be produced without changing a molecular weight and a molecular weight distribution of a polycarbonate resin.

The amount of the end modifier added is theoretically sufficient if it is an amount corresponding to the number of OH end groups of a polymer. For example, when a carboxylic halide or the like is used as the end modifier, where its addition amount increases, the carboxylic halide or the carboxylic acid halide at polymer ends is hydrolyzed by an alkali aqueous solution, and a side reaction generating a carboxyl group or its ion occurs. Further, the carboxylic ion is reacted with an unreacted carboxylic! halide to form an acid anhydride bond. A polycarbonate containing the acid anhydride bond is liable to induce decomposition by heat during melt processing such as injection molding, as compared with a polycarbonate that does not contain the acid anhydride bond. As a result, the molecular weight of a polymer as a molded article decreases, and mechanical strength deteriorates, which are not preferable. For this reason, the amount of the end modifier added is selected from a range of generally from 0.5 to 10 mol%, and preferably from 1 to 6 ml%, to the dihydroxy compound as a raw material, considering the kind, reactivity and the like of the end modifier used.

Where the OH groups at the molecular ends are 50% or more, even though the above-described Mw/Mn ratio or Mv/Mn' ratio is satisfied, flowability is impaired by viscosity increase due to reaction of mutual OH ends when melting, and the flowability that does not depend on shear rate is not secured.

Therefore, the OH groups occupy less than 50%, preferably less than 40%, more preferably less than 30%, and particularly preferably less than 10%, of the whole end groups.

<Proportion of sum of residual amounts of end modifier and acid anhydride of and modifier>

The polycarbonate resin of the present invention has the sum of the residual amounts of the end modifier and an acid halide of the end modifier of 20 ppm or less, preferably 10ppm or less, and more preferably 5 ppm or less. Where the sum of the residual amounts of the end modifier and an acid halide of the end modifier is large, the polycarbonate resin decomposes during molding, resulting in decrease in molecular weight, which is not preferable.

Reaction for introducing a substituent other than OH group is important to conduct the reaction by, for example, mixing a catalyst together with the above-described reactive end modifier and an alkali aqueous solution such as sodium hydroxide with a polycarbonate resin having OH groups at all ends (hereinafter sometimes referred to as "end OH type PC") produced by reacting a carbonate raw material and a dihydroxy compound.

That is, by conducting reaction by mixing a catalyst, the effect that a reaction rate for introducing a substituent increases is exhibited, and additionally the amount of the end modifier added can be reduced. As a result, it has been found that the affect of suppressing an acid anhydride bond of the end modifier is obtained, further the effect is obtained in washing reparation after polymerization, that is, separation removal of the residual end modifier, and by the use of a catalyst, the residual amount of the end modifier can be reduced.

Examples of the catalyst that can be used include a trialkylamine, N-ethylpyrrolidone, N-ethylmorpholine, N-isopropylpiperidine, N-isopropylmorpholine, triethylamine and N-ethylpiperidine. Those can be used alone or as mixtures of two or more thereof.

The amount of the catalyst added is preferably from 0.0005 to 1 mol% to the dihydroxy compound as a raw material. Where the amount of the catalyst added is less than 0.0005 mol%, it is necessary to conduct a reaction for long period of time in order to introduce a substituent. Therefore, contact time with an aqueous alkali solution prolongs, resulting in production of a large amount of an acid anhydride of the end modifier, and washing separation of the end modifier after polymerization reaction is insufficient. As a result, the residual amount of the end modifier tends to increase. Where an acid anhydride of the end modifier is formed in a large amount or a polycarbonate resin containing a large

residual amount of the end modifier is extrusion molded, the polycarbonate resin decomposes, resulting in decrease in molecular weight, which is not preferable, On the other hand, where the amount of the catalyst added exceeds 1 mol% to the dihydroxy compound as a raw material, reaction for introducing a substituent can be shortened, but a washing operation for removing the catalyst is complicated, which is not economical.

<Viscosity average molecular weight Mv>

The viscosity average molecular weight of the polycarbonate resin of the present invention is preferably from about 8,000 to 100,000. Where the molecular weight is too small, impact resistance of the polycarbonate resin deteriorates, and where the molecular weight is too large, melt flowability deteriorates. The viscosity average molecular weight is more preferably from 10,000 to 70,000, and particularly preferably from 12,000 to 60,000.

<Molding of polycarbonate resin>

Similar to the conventional polycarbonate resin, the polycarbonate resin of the present invention can be processed into various molded articles by injection molding, extrusion molding or the like. Examples of such a processed product include materials such as a film, a yarn and a plate; parts such as a lighting fitting and an optical instrument; and substrates such as an optical disc and magneto-optical disc. In producing those molded articles, stabilizers, rapping agents, combustion retardant, antistatic agents, fillers, fibers, impact strength-modifiers, and the like may be added to the polycarbonate resin of the present invention in the conventional manner.

[Production method of polycarbonate resin]

Production method of the polycarbonate resin of the present invention satisfying the requirements [I] and/or [II] is described in detail bellow.

To produce the polycarbonate resin of the present invention satisfying the requirements [I] and/or [II], reaction operation and reaction conditions are appropriately controlled in the production method of a polycarbonate resin described in detail below. For example, to control Mw/Mn and Mv/Mn' in the following production method of a polycarbonate resin, the amount of a catalyst used, such as pyridine hydrochloride, which greatly affects a molecular weight of a polycarbonate resin obtained, interfacial area during interfacial polycondensation and the like are controlled.

The production method of the polycarbonate resin of the present invention is not particularly limited. For example, the polycarbonate resin is produced by reacting a carbonate raw material and a dihydroxy compound to produce a polycarbonate resin having OH groups at all ends (end OH type PC) and introducing predetermined substituents into the OH groups at the molecular ends of the polycarbonate resin.

The carbonate raw material used herein is a compound that can form a carbonate bond:

[Chem. 1]

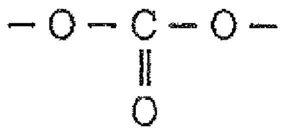

in a polycarbonate main chain by a polymer formation reaction such as condensation reaction and exchange reaction, an examples thereof include phosgene and carbonic diester.

Examples of the Carbonic diester include dimethyl carbonate, diethyl carbonate, diphenyl carbonate and ditolyl carbonate.

On the other hand, examples of the dihydroxy compound include an aliphatic dihydroxy compound and an aromatic dihydroxy compound. The aromatic dihydroxy compound includes an aromatic compound having two phenolic hydroxyl groups.

The end OH type PC according to the present invention can be produced by, for example, reacting an aromatic compound having two phenolic hydroxyl groups, typically represented by bisphenol A, and phosgene to from an oligomer, and polymerizing this oligomer in the absence of an end-terminator and in the presence of a catalyst such as pyridine hydrochloride or quinoline hydrochloride.

This production method is described in more detail. The aromatic compound having two phenolic hydroxyl groups can use compounds conventionally known as a raw material of a polycarbonate resin, as described in, for

example, U.S. Patents 4,982,014, 3,028,365, 2,999,835, 3,148,172, 3,275,601, 2,991,273, 3,271,367, 3,062,781, 2,970,131 and 2,999,846; German Patents 1,570,703, 2,063,050, 2,063,052 and 2,211,956; and French Patent 1,561,518,

Examples of the compound include hydroquinone resolcin, dihydroxydiphenol, bis(hydroxyphenyl)alkane, bis (hydroxyphenyl) cycloalkane, bis(hydroxyphenyl)sulfide, bis(hydxoxyphenyl)ether, bis (hydroxyphenyl)ketone, bis(hydxoxyphenyl)sulfone, bis (hydroxyphenyl)sulfoxide, bis(hydroxyphenyl)dialkylbenzene, and those derivatives having an alkyl or halogen substituent in the nucleus.

Of those, preferable examples include 2,2-bis(4-hydroxyphenyl)propane, 2,2-bis (3,5-dimethyl-4-hydroxyphenyl)propane, 1,1-bis(4-hydroxyphenyl)cyclohexane, and 1,1-bis(4-hydroxyphenyl)-3,3,5-trimethylcyclohexane.

A small amount of a branching agent having three or more functional groups can be used in combination with the aromatic compound having two phenolic hydroxyl groups. Such a branching agent is known, and examples thereof include 2,4-bis(4'-hydroxyphenyl-isopropyl)phenol, 2,6-bis (2'-hydroxy-5'-methylbenzyl)-4-methylphenol, 2-(4-hydroxyphenyl)-2-(2,4-dihydroxyphenyl)propane, 1,4-bis(4,4'-dihydroxytriphenylmethyl)benzene, 2,4-dihydroxybenzoic acid, trimesic acid, cyanuric chloride, bis(4'-hydroxyphenyl)-2-oxo-2,3-dihydroxyindole, and 3,3-bis(4-hydroxy-3-methylphenyl)-2-oxo-2,3-dihydroindole. Above all, a compound having three or more phenolic hydroxyl groups is preferable. The amount of the branching agent used varies depending on the desired degree of branching. In general, the branching agent is used in an amount of from 0.05 to 1 mol% to the aromatic compound having two phenolic hydroxyl groups. When the branching agent is used together, the viscosity average molecular weight Mv is liable to increase, and therefore care should be taken.

Properties required in the catalyst in obtaining the polycarbonate resin having a molecular weight distribution close to monodispersion are that pKa value in terms of a hydrochloride is 7 or less, preferably 6 or less and more preferably 5.5 or less. In detail, by using a catalyst having weak basicity, chloroformate molecular end is not ionized, and nucleophilic substitution reaction can preferentially be induced from only other ionized end (phenylene-ONa end). This differs in reaction mechanism from the conventional polycondensation during the polycarbonate resin formation which proceeds with only a single reaction, and as a result, a polycarbonate having a molecular weight distribution according to Poisson distribution is obtained.

Further, the polycarbonate resin of the present invention is preferably produced by an interfacial polymerization reaction in which an aqueous phase and an organic phase are present, as described hereinafter. In this interfacial polymerization reaction, reaction proceeds by a nucleophilic substitution reaction from only the ionized end, resulting in a successive reaction which necessarily causes only growth commensurate with an interfacial area per volume. Therefore, a molecular weight reached increases with increasing the interfacial area, a chloroformate molecular end undergoes hydrolysis by NaOH in the aqueous phase at the stage that condensation species have been lost, and molecular weight extension stops in the form of OH end. Where the interfacial area per volume is small, the chloroformate end as a molecular end to a growth reaction as a side reaction undergoes hydrolysis reaction by NaOH present in the aqueous phase, resulting in the state that cannot grow to a molecular weight more than that, that is, an interfacial area-dominated molecular weight. The background that such a reaction is established is that the growth reaction proceeds at a very high rate as compared with hydrolysis reaction.

Contrary to this, polycondensation generated in the conventionally general polycarbonate resin formation does not involve such an unbalance of reaction. In the conventional polycondensation, a catalyst having high pKa value is used, and the chloroformate end is in the activated state like ions by the catalyst having high pKa value, resulting in having reaction activity which is substantially comparable to the ionized phenylene-ONa end, at both molecular ends. As a result, a condensate having a general molecular weight distribution according to Flory's most probable distribution is obtained, and at the same time, where an end-terminator is not present, an ultrahigh molecular weight compound is generally formed.

A salt of a nitrogen-containing heterocyclic compound is used as a catalyst satisfying the above-described requirements. For example, salts of compounds having unsaturated nitrogen- containing six-membered ring in which carbon atoms in the ring may be substituted with an alkyl group, an alkoxy group, a halogen atom and the like, such as pyridine, quinoline, isoquinoline, picoline, acridine, pyrazine, pyridazine, pyrimidine and 2,4,6-trimethyltriazine, are used. Further, salts of compounds having unsaturated nitrogen-containing five-membered ring, such as phenothiazine, 2-methylimidazole, benzimidazole, benzotriazole and benzothiazole, are used. Of those nitrogen-containing heterocyclic compounds, pyridine, quinoline, picoline, imidazoles, pyrazoles, triazoles and the like are preferably used. Those catalysts are used in an amount of generally from 0.01 to 1 mol%, preferably from 0.05 to 0.5mol%, and particularly preferably from 0.05 to 0.2 mol%, to the aromatic compound having two phenolic hydroxyl groups as a raw material. Those nitrogen-containing heterocyclic compounds are used in a salt form such as a hydrochloride, a sulfate, a nitrate and a hydrobromate, but it is considered that those are present in a dissolution equilibrium state between a free base form and a salt form in a reaction system.

Those catalysts may be present in a reaction system from the start of the reaction between the dihydroxy compound such as an aromatic compound having two phenolic hydroxyl groups, and the carbonate raw material such

as phosgene, or may be added to the reaction system after the reaction. However, when addition of the catalyst is delayed, it is difficult to control a molecular weight of a polycarbonate resin formed, Therefore, the catalyst is preferably added to the reaction system between the start of the reaction of the dihydroxy compound and the carbonate raw material, and the start of increasing a molecular weight, that is, speaking from the standpoint of a viscosity average molecular weight Mv, up to reaching Mv to 2,000 to 3,000.

As a condensation catalyst, the conventional catalyst used in a two-phase interfacial polymerization method may be used together. In this case, trialkylamine, N-ethylpyrrolidone, N-ethylpiperidine, N-ethylmorpholine, N-isopropylpiperidine, N-isopropylmorpholine and the like are generally used as the catalyst used together. Above all, triethylamine and N-ethylpiperidine is preferably used. The condensation catalyst is preferably supplied to the reaction system after supplying the carbonate raw material such as phosgene.

For the reaction, an aqueous solution prepared by dissolving the dihydroxy compound such as an aromatic compound having two phenolic hydroxyl groups and an alkali such as sodium hydroxide in water, and an inert organic solvent are mixed to prepare an emulsion, and the carbonate raw material such as phosgene is supplied to the emulsion to conduct redaction, thereby forming an oligomer. A molar ratio between the dihydroxy compound such as an aromatic compound having two phenolic hydroxyl groups and an alkali such as sodium hydroxide is generally 1:1.8 to 3.5, and preferably 1:2.0 to 3.2. A small amount of a reducing agent such as hydrosulfite is preferably added to the aqueous solution. Further, a ratio of an organic phase to an aqueous phase is preferably from 0.2 to 1.0 (volume ratio).

The inert organic solvent used is that the carbonate raw material such as phosgene, and the oligomer and polycarbonate resin formed by the reaction dissolve therein, but it does not mutually dissolve in water, under the reaction conditions. The amount of the inert organic solvent used is an amount that the oligomer formed dissolves therein. It is generally used in an amount such that the concentration of the oligomer solution formed is from 10 to 40% by weight.

Representative examples of the inert organic solvent include aliphatic hydrocarbons such as hexane and n-heptane; chlorinated aliphatic hydrocarbons such as methylene chloride, chloroform, carbon tetrachloride, dichloroethane, trichloroethane, tetrachloroethane, dichloropropane and 1,2-dichloroethylene; aromatic hydrocarbons such as benzene, toluene and xylene; chlorinated aromatic hydrocarbons such as chlorobenzene, o-dichlorobenzene and chlorotoluene; and substituted aromatic hydrocarbons such as nitrobenzene and acetophenone. Above all, chlorinated hydrocarbons such as methylene chloride and chlorobenzene are preferably used. Those inert organic solvent can be used alone or as mixtures with other solvents.

oligomer formation reaction is conducted at 80°C or lower, and preferably 70°C or lower. Where the reaction temperature is too high, side reaction increases, and phosgene basic unit deteriorates. Reversely, low reaction temperature is advantageous in reaction control. However, the reaction is a large exothermic reaction, and cost for maintaining this temperature increases as temperature of reaction system is low. Therefore, considering those points, the reaction is generally conducted at 10 to 65°C.

The oligomer formed as above is polymerized to form a polycarbonate rosin. Generally, a reaction mixed liquid obtained by the above oligomer formation step is separated into an aqueous phase and an organic phase having the oligomer dissolved therein, and according to need, an inert organic solvent is added such that the oligomer concentration in the organic phase is from 5 to 30% by weight. An alkali aqueous solution such as sodium hydroxide is newly added to the oligomer solution, and the catalyst described before is then added thereto to conduct interfacial polymerization. The ratio of the aqueous phase to the organic phase in this case is preferably from 0.2 to 2.0 (volume ratio). Temperature of the interfacial polymerization reaction varies depending on the organic solvent used, but when methylene chloride is used, the reaction is generally conducted at 10 to 35°C.

After completion of the reaction, the organic phase is washed with an alkali aqueous solution such as sodium hydroxide until the content of chloroformate group in the polycarbonate resin is 0.1 μeq/g or less, washed with an acid aqueous solution to neutralize the alkali and simultaneously remove the catalyst, and then further washed with water to completely remove an electrolyte. Finally, the organic solvent is removed from the organic phase by evaporation to obtain a polycarbonate resin.

The polycarbonate resin thus obtained has a viscosity average molecular weight of generally from about 8,000 to 100,000. As described before, where the molecular weight is too small, impact resistance of the polycarbonate resin deteriorates, and where the molecular weight is too large, melt flowability deteriorates. The viscosity average molecular weight is preferably from 10,000 to 70,000, and particularly preferably from 12,000 to 60,000.

The polycarbonate resin includes all OH end polycarbonate resin having extremely narrow monocular weight distribution in the state after formation by interfacial polymerization reaction, that is, even thought treatment to control a molecular weight distribution, such as fractional precipitation or extraction removal of a low molecular weight component, is not conducted.

However, the end OH type PC having OH groups at all ends is difficult to avoid reaction of mutual OH ends when melt molding, and increases its viscosity at that time, and a polycarbonate resin having flowability that does not depend on shear rate, that is, having extremely excellent flowability as compared with the conventional polycarbonate resin, is not obtained. For this reason, in the present invention, at least one reactive compound selected from the group

consisting of benzoyl chloride, phenyl chloroformate, acetyl chloride, propanoyl chloride and butanoyl chloride, as the end modifier described before is reacted with the end OH type PC in order to substitute 50% or more, preferably 60% or more, more preferably 70% or more, end particularly preferably from 90 to 100%, of OH groups at the molecular ends of the end OR type PC with at least one substituent selected from the group consisting of a OCOR group and a COR group (R: organic group such a alkyl or aryl),

The reaction for the substituent introduction is conducted by mixing the reactive compound, an alkali aqueous solution such as sodium hydroxide and as a catalyst, at least one of trialkylamine, N-ethylpyrrolidone, N-ethylpiperidine, N-ethylmorpholine, N-isopropylpiperidine, N-isopropylmorpholine, triethylamine, N-ethylpiperidine, and the like with the end OH type PC obtained, by the above-described polymerization reaction (the end OH type PC in the form of a polymerization reaction formation liquid may directly be subjected to substituent introduction reaction).

As described above, the amount of the catalyst used is preferably from 0.001 to 1 mol% to the dihydroxy compound as a raw material. Where the amount of the catalyst added is less than 0.001 mol%, it is necessary to conduct reaction for a long period of time to introduce a substituent, washing separation of the end modifier after polymerization reaction is insufficient, and as a result, the residual amount of the end modifier tends to increase. On the other hand, where the amount of the catalyst added exceeds 1 mol% to the dihydroxy compound as a raw material, reaction for substituent introduction can be shortened, but washing operation for removing the catalyst is complicated, which is not economical.

As described above, in the reaction between the end OH type PC and the end modifier, the residual amount of the end modifier in the polycarbonate resin obtained can be reduced by using the catalyst. However, as described above it is preferable to sufficiently conduct alkali washing after completion of the reaction between the end OH type PC and the end modifier in order to add the residual amount of the end modifier. Specifically, the organic phase containing polycarbonate after completion of the reaction is washed with an alkali aqueous solution such as sodium hydroxide repeatedly to remove the end modifier, washed with an acid aqueous solution to neutralize the alkali and simultaneously remove the catalyst, and then further washed with water to completely remove an electrolyte, thereby obtaining the polycarbonate resin of the present invention.

In producing the polycarbonate resin of the present invention as above, the reason that the polycarbonate resin remarkably differs from a polycarbonate resin obtained by the conventional production method, is due to that in the production, a nitrogen-containing heterocyclic compound such as pyridine hydrochloride is used as an (interfacial polymerization) catalyst, and an end sealant is not used. In old times, a method by solution polymerization using pyridine as a solvent was proposed as the production method of a polycarbonate resin (U.S. Patents 3,275,601, 3,269,985, 3,437,639, 3,804,722 and 3,428,600). This polymerization method is that a heterocyclic compound such as pyridine is used as a solvent for the purpose of dissolving bisphenol as a raw material and trapping hydrochloric acid formed by the reaction. The effect of activating only one end during condensation is not exhibited, and only a molecular weight distribution of a most probable distribution or more is obtained. Since those solution method technologies, an interfacial polycondensation method is the mainstream of the polycarbonate resin production method. However, a catalyst regularly used in the production of a polycarbonate resin is triethylamine, and when polymerization of an oligomer is conducted using only triethylamine as a catalyst, where an end sealant is not present, polymerization excessively proceeds, and a gel-like ultrahigh molecular weight polycarbonate resin is formed, Therefore, use of the end sealant was indispensable in the conventional production of a polycarbonate resin. However, where polymerization is conducted in the presence of the end sealant, an end-sealed molecule does not grow. As a result, variation occurs in the growth of molecule, and molecular weigh distribution necessarily has a considerable width including this variation portion (Flory's most probable distribution + variation). Therefore, where the above-described nitrogen-containing heterocyclic compound such as pyridine hydrochloride is used as a catalyst, it is considered that it is easy to control a reaction even though an end sealant is not present, molecule grows uniformly because a molecular end is not sealed, and molecular weight distribution is necessarily narrow.

The present invention is described in more detail by reference to the following Examples, but the invention is not limited by the following Examples so far as it is not beyond its gist.

In the following Examples and Comparative Examples, gel permeation chromatography, quantitative determination of an end group, an end modifier, a residual amount of an end sealant, and evaluation of melt flowability are conducted as follows.

(1) Gel permeation chromatography:

Apparatus: HLC-8020, a product of Tosoh Corporation
Column: Four columns (diameter: 7.8 mmϕ, length: 300 mm) filled, with TSK, 5000HLX, 4000HLX, 3000HLX and 2000HLX (products of Tosoh Corporation), respectively, as fillers were connected and used.

Detector: Refractometer
Eluent: Tetrahydrofuran
calibration curve: Prepared using a standard polystyrene (molecular weight: 761 (Mw/Mn≦1.14), 2000 (Mw/Mn≦1.20), 4000 (Mw/Mn≦1.06), 9000 (Mw/Mn≦1.04), 17500 (Mw/Mn≦1.03), 50000 (Mw/Mn≦1.03), 233000 (Mw/Mn≦1.05), 600000 (Mw/Mn≦1.05) and 900000 (Mw/Mn≦1.05), a product of Chemco Scientific Co., Ltd.
Operation: Mw and Mn were obtained in terms of a polystyrene from a chart obtained by detecting from refractive index difference, and Mw/Mn was calculated. The base line at this time was calculated by faithfully extending a base before initial rise of high molecular weight in a state that an apparatus is completely stabilized, and connecting to the point returned to the original base line at a low molecular weight side. It was confirmed that the standard polystyrene is measured and is all fallen within the standard.

(2) Quantitative determination of end group:

The sum of the amount of end OH groups and the amount of an end modifier or an end sealant were considered as the number of end groups, and a number average molecular weight (Mn') was calculated as follows.

$$Mn' = 10^6 / (\text{number of eng groups } (\mu eq/g) \times 1/2)$$

The amount of end OH groups was quantitatively determined as follows. 0.1 g of a polycarbonate resin was dissolved in 10 ml of methylene chloride, and 5 ml of 5 wt% methylene chloride solution of acetic acid (special grade chemical, a product of Wako Pure Chemical Industries, Ltd.) and 10 ml of 2.5 wt% methylene chloride solution of titanium tetrachloride (special grade chemical, a product of Wako Pure Chemical Industries Ltd.) were added to the resulting solution to color. Absorbance at a wavelength of 480 nm was measured using a spectrophotomoter (UV 160 Model, a product of Hitachi, Ltd.).
Separately, absorbance index was obtained using a methylene chloride solution of a divalent phenol used at the time of the production, and concentration of OH group in a sample was quantitatively determined
Further, the amount of an end modifier and the amount of an end sealant were measured as follows. 0.2 g of a polycarbonate resin was dissolved in 2 ml of methylene chloride, and a methyl alcohol solution of 1N sodium hydroxide was added thereto. The resulting solution was subjected to alkali hydrolysis at 75°C for 30 minutes under reflux with heating, and after cooling, was adjusted to pH 2 to 3 with 6N hydrochloric acid aqueous solution. The amount of an end modifier bonded and the amount of an end sealant bonded were measured with a high performance liquid chromatography (column: MCI-GEL 1HU ODS, inner diameter 4.5 mm, length 15 cm, eluent: methanol/water=50/50, detector: UV 280 nm).
Separately, an area correction factor was previously obtained using an end modifier and an end sealant used, and concentration in a sample was quantitatively determined.

(3) Residual amount of and modifier and end sealant, and acid anhydride amount of end modifier:

1.0 g of a polycarbonate resin was dissolved in 100 ml of tetrahydrofuran, and a residual end modifier amount, an acid anhydride amount of an end modifier and a residual end sealant amount were measured with a high performance chromatography (column: MCI-GEL 1HU ODS, inner diameter 4.5 mm, length 15 cm, eluent : terahydrofuran/water=50/50 → tertrahydrofuran 100%, 60 min gradient elution, detector: UV 254 nm). Separately, an area correction factor was previously obtained using an end modifier (benzoyl chloride), an acid anhydride of the end modifier (benzoic anhydride) and an end sealant (p-tert-butylphenol) used, and concentration in a sample was quantitatively determined.

(4) Melt viscosity (Pa·s) :

Using a capillary rheometer having a die diameter 1 mmϕ × 30 mmL (a product of Toyo Seiki Co., Ltd.), a sample dried at 130°C for 5 hours was heated at a constant temperature, and a melt viscosity was measured at shear rate $\gamma$ =9.12 to 1,824 ($sec^{-1}$).

(5) Spiral flow length (SFL):

A spiral flow length of thickness 2 mm was measured at an injection pressure of 300 $kg/cm^2$, a mold temperature of 90°C and a cylinder temperature of 250 to 340°C.
This value is a measure of flowability, and a large value means good flowability,

Example 1

An aqueous solution obtained by dissolving bisphenol A in a sodium hydroxide aqueous solution having hydrosulfite dissolved therein at 35°C; and then cooling to 25°C, and methylene chloride cooled to 5°C were continuously supplied to a stainless steel pipe having an inner diameter of 6 mm, followed by mixing. The mixed liquid was emulsified by passing through a homomixer (T.K. Homomic Line Flow LF-500 Model, a product of Premix Corporation) to prepare an emulsion. Supply amounts to the pipe are bisphenol A: 16.31 kg/hr, sodium hydroxide: 5.93 kg/hr, water: 101.1 kg/hr, hydrosulfite: 0.018 kg/hr, and methylene chloride: 68.0 kg/hr.

The emulsion formed was flown in a Teflon (a registered trade make) pipe reactor having an inner diameter of 6 mm and a length of 34 m through a pipe having an inner diameter of 6 mm. At the same time, liquefied phosgene cooled to 0°C was supplied to the pipe reactor at 7.5 kg/hr to react, thereby forming an oligomer. Flow rate of the pipe reactor is 1.7 m/ sec. Phosgene used was obtained by filling a cylindrical vessel having a diameter of 55 mm and a height of 500 mm with the following activated carbon, and passing phosgene cooled to -5°C through the vessel at SV=3 $hr^{-1}$.

<Activated carbon>

Trade name Yashicoal S (a product of Taihei Chemical Industrial Co., Ltd.)

| | |
|---|---|
| True density | 2.1 g/ml |
| Porosity | 40% |
| Specific surface area | 1,200 $m^2/g$ |
| Pore volume | 0.86 ml/g |

In the pipe reactor, temperature elevated to 60°C, but temperature at the outlet was 35°C by external cooling. A reaction mixture was allowed to stand to separate into an aqueous phase and an oil phase. Chloroformate concentration of an oligomer obtained was 0.47N, OH end concentration was 0.23N, and oligomer concentration was 27.7%. 40 kg was batched off from the oil phase obtained, and charged in a reaction tank having an inner volume of 200 liters equipped with Faudler blade, 25 kg of methylene chloride, 5.75 kg of a 25% sodium chloride aqueous solution, 41 kg of waster and 0.87 g (0.020 mol% to bisphenol) of pyridine hydrochloride as a catalyst were added to the reaction tank, and the resulting mixture was stirred at 10°C for 60 minutes at 360 rpm in a nitrogen atmosphere to conduct polymerization reaction, thereby forming all OH-ended (OH end group concentration: 60 μeq/g) polycarbonate resin.

90 g (1.55 mol% to bisphenol) of benzoyl chloride, 105 g of a 25 wt% sodium chloride aqueous solution and 218 g (0.10 mol% to bisphenol) of a 2 wt% triethylamine aqueous solution were added to the reaction mixture, and reaction was continued for 1 hour under stirring at 360 rpm. Thereafter, 30 kg of methylene chloride and 7 kg of water were added, and the resulting mixture was stirred at room temperature for 20 minutes, and allowed to stand to separate into an aqueous phase and an organic phase. Washing operation of adding 20 kg of a 0.1N sodium hydroxide aqueous solution to the organic phase, followed by stirring for 15 minutes and then allowing to stand to separate into an aqueous phase and an organic phase was repeated three times. 20 kg of 0.1N hydrochloric acid was added to the organic phase after alkali washing, followed by stirring for 15 minutes, and the resulting mixture was allowed to stand to separate into an aqueous phase and an organic phase. Washing operation of adding 20 kg of pure water to the organic phase, followed by stirring for 15 minutes and then allowing to stand to separate into an aqueous phase and an oil phase was repeated three times. As a result, chlorine ions were not detected in the aqueous phase, and therefore, the washing operation was stopped. Methylene chloride was removed by evaporation from the organic phase with a kneader, and a powder obtained was dried to obtain a polycarbonate resin of the present invention.
Properties of the polycarbonate resin obtained are shown in Table 1 and Fig. 1. Melt viscosity and spiral flow length (SFL) were measured at 300°C.

Example 2

A polycarbonate resin of the present invention was produced in the same manner as in Example 1, except that the amount of pyridine hydrochloride added was 0.72 g (0.015 ml% to bisphenol), the amount of benzoyl chloride added was 171 g (2.95 ml% to bisphenol) and a 25 wt% sodium hydroxide aqueous solution was 200 g. Properties of the polycarbonate resin obtained are shown in Table 1 and Fig. 2. Melt viscosity and spiral flow length (SEL) were measured at 280°C.

Example 3

A polycarbonate resin of the present invention was produced in the same manner as in Example 2, except that polymerization reaction was conducted by stirring at 10°C for 60 minutes at 320 rpm to obtain an all OH-ended polycarbonate resin, and 283 g (4.87 mol% to bisphenol) and 343 g of a 25 wt% sodium hydroxide aqueous solution where added to the reaction mixture to conduct polymerization reaction. Properties of the polycarbonate resin obtained are shown in Table 1 and Fig. 3. Melt viscosity and spiral flow length (SFL) were measured at 250°C.

Example 4

An aqueous solution obtained by dissolving bisphenol z (1,1-bis(4-hydroxyphenyl)cyclohexane, hereinafter referred to as BPZ) and 4,4'-biphenol (hereinafter referred to as Bp) in a sodium hydroxide aqueous solution having hydrosulfite dissolved therein at 45°C and then cooling to 40°C, and methylene chloride cooled to 5°C were continuously supplied to a stainless steel pipe having an inner diameter of 6 mm, followed by mixing. The mixed liquid was emulsified by passing through a homomixer (T.K. Homomic Line Flow LF-500 Model, a product of Premix Corporation) to prepare an emulsion. Supply amounts to the pipe are BPZ: 7.49 kg/hr, Bp: 0.81 kg/hr, sodium hydroxide: 3.87 kg/hr, water: 106.4 kg/hr, hydrosulfite: 0.018 kg/hr, and methylene chloride: 44.5 kg/hr.

The emulsion formed was flown in a Teflon (a registered trade make) pipe reactor having an inner diameter of 6 mm and a length of 34 m through a pipe having an inner diameter of 6 nm. At the same time, liquefied phosgene cooled to 0°C was supplied to the pipe reactor at 7.5 kg/hr to react, thereby forming an oligomer. Flow rate of the pipe reactor is 1.7 m/sec. Phosgene used was obtained by filling a cylindrical vessel having a diameter of 55 mm and a height of 500 mm with the following activated carbon, and passing phosgene cooled to -5°C through the vessel at SV=3 $hr^{-1}$.

<Activated carbon>

Trade name Yashicoal S (a product of Taihei Chemical Industrial Co., Ltd.)

| | |
|---|---|
| True density | 2.1 g/ml |
| Porosity | 40% |
| Specific surface area | 1,200 $m^2$/g |
| Pore volume | 0.86 ml/g |

In the pipe reactor, temperature elevated to 60°C, but temperature at the outlet was 35°C by external cooling. A reaction mixture was allowed to stand to separate into an aqueous phase and an oil phase. Chloroformate concentration of an oligomer obtained was 0.47N, OH end concentration was 0.005N, and oligomer concentration was 19.5%. 40 kg was batched off from the oil phase obtained, and charged in a reaction tank having an inner volume of 200 liters equipped with Faudler blade. 5.5 kg of methylene chloride, 6.37 kg of a 25% sodium chloride aqueous solution, 30 kg of water and 8.89 q (0.30 mol% to BPZ+Bp) of pyridine hydrochloride as a catalyst were added to the reaction tank, and the resulting mixture was stirred at 10°C for 60 minutes at 220 rpm in a nitrogen atmosphere to conduct polymerization reaction, thereby forming all OH-ended (OH end group concentration: 103 μeq/g) polycarbonate resin.

110 g (3.07 ml% to BPZ+Bp) of benzoyl chloride, 120 g of a 25 wt% sodium chloride aqueous solution and 130 g (0.10 mol% to bisphenol) of a 2 wt% triethylamine aqueous solution were added to the reaction mixture, and reaction was continued for 1 hour under stirring at 220 rpm. Thereafter, 30 kg of methylene chloride and 7 kg of water were added, and the resulting mixture was stirred at room temperature for 20 minutes, and allowed to stand to separate into an aqueous phrase and an organic phase. Washing operation of adding 20 kg of a 0.1N sodium hydroxide aqueous solution to the organic phase, followed by stirring for 15 minutes and then allowing to stand to separate into an aqueous phase and an organic phase was repeated three times. 20 kg of 0.1N hydrochloric acid was added to the organic phase after alkali washing, followed by stirring for 15 minutes, and the resulting mixture was allowed to stand to separate into an aqueous phase and an organic phase. Washing operation of adding 20 kg of pure water to the organic phase, followed by stirring for 15 minutes and then allowing to stand to separate into an aqueous phase and an oil phase was repeated three times. As a result, chlorine ions were not detected in the aqueous phase, and therefore, the washing operation was stopped. Methylene chloride was removed by evaporation from the organic phase with a kneader, and a powder obtained was dried to obtain a polycarbonate resin of the present invention. It was confirmed to have the following structure by $^1$H-NMR.

[Chem. 2]

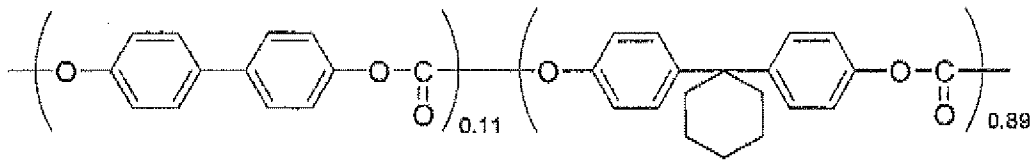

Properties of the polycarbonate resin obtained are shown in Table 1 and Fig. 1. Melt viscosity and spiral flow length (SFL) were measured at 340°C.

[Comparative Example 1]

An oligomerized emulsion obtained from the pipe reactor of Example 1 was further introduced into a reaction tank having an inner volume of 50 liters equipped with a stirred, and stirred at 30°C in a nitrogen atmosphere. 0.005 kg/hr of triethylamine as a catalyst and 0.31 kg/hr (2.90 mol% to bisphenol) of p-t-b-utylphenol as a molecular weight regulator (end sealant) were introduced into the oligomerization tank. Sodium salt of unreacted bisphenol A (BPA-Na) present in the aqueous phase was completely consumed by oligomerization, and an aqueous phase and an oil phase were separated by allowing to stand, thereby obtaining a methylene chloride solution of an oligomer. Chloroformata concentration of the oligomer obtained wars 0.29N, OH end concentration was 0.17N and oligomer concentration was 26.5%.

63 kg in the methylene chloride solution of the oligomer was charged in a reaction tank having an inner volume of 200 liters equipped with Faudler blade. 38 kg of methylene chloride for dilution was added to the reaction tank, and 4.0 kg of a 25 wt% NaOH aqueous solution, 20 kg of water and 6.4 kg of triethylamine were further added thereto. The resulting mixture was stirred at 30°C in a nitrogen atmosphere to conduct polycondensation reaction for 60 minutes, thereby obtaining a polycarbonate resin. 30 kg of methylene chloride and 7 kg of water were added to the reaction liquid, followed by stirring for 20 minutes. Stirring was stopped, and an aqueous phase and an organic phase were separated. 20 kg of 0.1N hydrochloric acid was added to the organic phase separated, followed, by stirring for 15 minutes to extract triethylamine and a small amount of a residual alkali component. Stirring was stopped, and an aqueous solution and an organic phase were separated. 20 kg of pure water was added to the organic phase separated, followed by stirring for 15 minutes. Stirring was stopped, and an aqueous solution and an organic phase were separated. This operation was repeated (three times) until chlorine ions were not detected in extraction discharged water.

Methylene chloride was removed by evaporation from the purified polycarbonate resin solution obtained with a kneader, and a powder obtained was dried to obtain a polycarbonate resin.
Properties of the polycarbonate resin obtained are shown in Table 1 and Fig. 1. Melt viscosity and spiral flow length (SFL) were measured at 300°C.

[Comparative Example 2]

A polycarbonate resin was produced in the same manner as in Comparative Example 1, except that the feed amount of p-t-butylphenol as a molecular weight regulator was changed to 0.42 kg/hr (3.92 mol% to bisphenol), and its properties are shown in Table 1 and Fig. 2. Melt viscosity and spiral flow length (SFL) were measured at 280°C.

[Comparative Example 3]

A polycarbonate resin was produced in the same manner as in Comparative Example 1, except that the feed amount of p-t-butylphenol as a molecular weight regulator was changed to 0.65 kg/hr (6.05 mol% to bisphanol), and its properties are shown in Table 1 and Fig. 2. Melt viscosity and spiral flow length (SFL) were measured at 250°C.

[Comparative Example 4]

Polymerization reaction was conducted according to Example 1 described in Japanese Patent 3720687. Specifically, in introducing a substituent into an all end OH type PC, polymerization reaction was conducted by adding an end modifier and sodium hydroxide in an equivalent amount of the end modifier, without adding a catalyst (triethylamine). Properties of a polycarbonate resin obtained are shown in Table 1. Spiral flow length (SFL) was measured at 280°C.

[Comparative Example 5]

An oligomerized emulsion obtained from the pipe reactor of Example 4 was further introduced into a reaction tank having an inner volume of 50 liters equipped with a stirrer, and stirred at 30°C in a nitrogen atmosphere. 0.13 kg/hr (3.51 mol% to bisphenol) of p-t-butylphenol as a molecular weight regulator (end sealant) was introduced into the oligomerization tank. Sodium salt of unreacted bisphenol A (BPA-Na) present in the aqueous phase was completely consumed by oligomerization, and an aqueous phase and an oil phase were separated by allowing to stand, thereby obtaining a methylene chloride solution of an oligomer. Chloroformate concentration of the oligomer obtained was 0.45N, OH and concentration was 0.002N and oligomer concentration was 19.6%.

40 kg in the methylene chloride solution of the oligomer was introduced into a reaction tank having an inner volume of 200 liters equipped with Faudler blade. 5.5 kg of methylene chloride for dilution was added to the reaction tank, and 6.4 kg of a 25 wt% NaOH aqueous solution, 30 kg of water and 1.8 kg of triethylamine were further added thereto. The resulting mixture was stirred at 30°C in a nitrogen atmosphere to conduct polycondensation reaction for 60 minutes, thereby obtaining a polycarbonate resin. 30 kg of methylene chloride and 7 kg of water were added to the reaction liquid, followed by stirring for 20 minutes. Stirring was stopped, and an aqueous phase and an organic phase were separated. 20 kg of 0.1N hydrochloric acid was added to the organic phase separated, followed by stirring for 15 minutes to extract triethylamine and a small amount of a residual alkali component. Stirring was stopped, and an aqueous solution and an organic phase were separated. 20 kg of pure water was adder to the organic phase separated, followed by stirring for 15 minutes. Stirring was stopped, and an aqueous solution and an organic phase were separated. This operation was repeated (three times) until chlorine ions were not detected in extraction discharged water.

Methylene chloride was removed by evaporation from the purified polycarbonate resin solution obtained with a kneader, and a powder obtained was dried to obtain a polycarbonate resin. It was confirmed to be the following structure by $^1$H-NMR.

[Chem. 3]

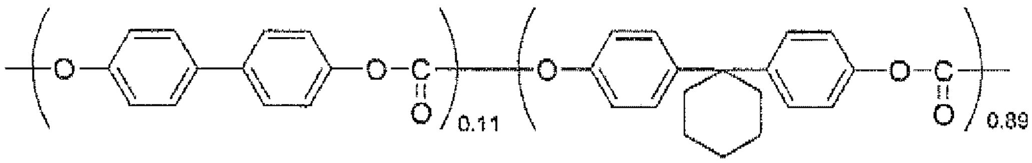

Properties of the polycarbonate resin obtained are shown in Table 1 and Fig. 1. Melt viscosity and spiral flow length (SFL) were measured at 340°C.

[TABLE 1]

| | Comparative Example | | | | |
|---|---|---|---|---|---|
| | 1 | 2 | 3 | 4 | 5 |
| Kind of end sealant | p-t-Butylphenol | | | - | p-t-Butyl-phenol |
| Amount of end sealant used (mol% to bisphenol) | 2.90 | 3.92 | 6.05 | - | 3.51 |
| Kind of and modifier | - | - | - | Benzoyl chloride | - |
| amount of end modifier used (mol% to bisphenol) | - | - | - | 6.35 | - |
| Kind of catalyst when introducing substituent | - | - | - | - | - |
| Amount of catalyst used when introducing substituent (mol% to bispenol) | - | - | - | - | - |

(continued)

| | | | Comparative Example | | | | |
|---|---|---|---|---|---|---|---|
| | | | 1 | 2 | 3 | 4 | 5 |
| Properties of polycarbonate resin | Viscosity average molecular weight (Mv) | Before melt viscosity measurement | 25800 | 21200 | | 18200 | 21200 |
| | | After melt viscosity measurement | 25700 | 21200 | 15100 | 16500 | 21200 |
| | Molecular weight distribution (Hw/Mn from GPC) | | 2.88 | 2.76 | 2.62 | 1.35 | 2.78 |
| | Amount of end OH group (μeq/g) | | 1.5 | 1.6 | 1.2 | 3.5 | 3.4 |
| | Amount of end phenyl group (μeq/g) | | | - | - | 127.9 | - |
| | Amount of end p-t-butylphenol group (μeq/g) | | 114.0 | 153.2 | 237.4 | - | 133.5 |
| | Number average molecular weight (Mn' from number of end group) | | 17300 | 12900 | 8400 | 15200 | 14600 |
| | Mv/Mn' (from number of end group) | | 1.49 | 1.64 | 1.82 | 1.20 | 1.45 |
| | log $MV_{9.12}$ - | | 3.4 | 3.1 | 3.0 | 2.8 | 3.0 |
| | log $MV_{1871}$ | | 2.6 | 2.6 | 2.6 | 2.4 | 2.5 |
| | (log $MV_{9.12}$-log $MV_{1824}$)/Mv (x$10^{-5}$) | | 2.8 | 2.2 | 2.6 | 2.2 | 2.4 |
| | Residual amount (ppm) | End sealant (p-t-Butylphenol) | <1 | <1 | <1 | - | <1 |
| | | End modifier (Benzoyl chloride) | - | - | - | 31 | - |
| | | Acid anhydride of end modifier (Benzoic anhydride) | - | - | - | 570 | - |
| | | Sum of end modifier and its acid anhydride | - | - | - | 601 | - |
| | Spiral flow length (SFL) (ca) | | 11.8 | 14.3 | 9.1 | 15.3 | 13.2 |

While the invention has been described in detail and with reference to specific embodiments thereof, it will be apparent to one skilled in the art that various changes and modifications can be made therein without departing from the spirit and scope thereof.

This applications is based on Japanese Patent Application (Patent Application No. 2006-116905) filed April 20, 2006 and Japanese Patent Application (Patent Application No. 2007-092112) filed March 30, 2007, the entire contents thereof being hereby incorporated by reference.

Industrial Applicability

The polycarbonate resin of the present invention is a polycarbonate resin having an extremely narrow molecular weight distribution, good flowability when melting, and particularly extremely good flowability when melting that does not depend on shear rate, and is therefore extremely industrially useful to various applications including injection molding of thin and high-precise products.

## Claims

1. A polycarbonate resin, **characterized in that** a value obtained by dividing difference between a logarithmic value log $MV_{9.12}$ of a melt viscosity Pa·s measured at shear rate of 9.12 $sec^{-1}$ and a logarithmic value log $MV_{1824}$ of a melt viscosity Pa·s measured at shear rate of 1824 $sec^{-1}$, with a capillary rheometer having a die diameter of 1 mmϕ and an effective length of 30 mmL, by a viscosity average molecular weight Mv calculated by the following equations: viscosity difference/molecular weight ratio, (log $MV_{9.12}$ - log $MV_{1824}$)/Mv, is $2.0\times10^{-5}$ or less,

$$\eta_{sp}/C=[\eta]\times(1+0.28\eta_{sp})$$

$$[\eta]=1.23\times10^{-4}\times Mv^{0.83}$$

in the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl.

2. The polycarbonate resin as claimed in claim 1, **characterized in that** the viscosity difference/molecular weight ratio, (log $MV_{9.12}$ - log $MV_{1824}$)/Mv is $1.6\times10^{-5}$ or less.

3. The polycarbonate resin in claimed in claim 2, **characterized in that** the viscosity difference/molecular weight ratio, (log $MV_{9.12}$ - log $MV_{1824}$)/Mv is $1.0\times10^{-5}$ or less.

4. A polycarbonate resin, **characterized in that** it is a polycarbonate resin obtained by reacting a carbonate raw material and a dihydroxy compound, and is satisfied with the following requirements 1) to 4),

    1) It has R-CO- group or R'-O-CO- group, wherein R and R' each shows an organic group, at a molecular end, and OH ends occupy less than 50% of the whole end groups,
    2) The sum of the residual amounts of an end modifier and an acid anhydride of the end modifier is 20 ppm or less,
    3) A ratio of a weight average molecular weight Mw to a number average molecular weight Mn, in terms of a polystyrene measured by gel permeation chromatography: Mw/Mn is 1.45 or less, and
    4) A ratio of a viscosity average molecular weight Mv calculated by the following equation to a number average molecular weight Mn' calculated from the number of molecular ends: Mv/Mn' is 1.40 or less,

$$\eta_{sp}/C=[\eta]\times(1+0.28\eta_{sp})$$

$$[\eta]=1.23\times10^{-4}\times Mv^{0.83}$$

    in the above equations, $\eta_{sp}$ is a specific viscosity measured at 20°C with respect to a methylene chloride solution of a polycarbonate resin, C is a polycarbonate resin concentration of the methylene chloride solution, and C=0.6 g/dl.

5. The polycarbonate resin as claimed in claim 1, **characterized in that** it is a polycarbonate resin obtained by reacting a carbonate raw material and a dihydroxy compound, and is satisfied with the following requirements 1) to 4),

1) It has R-CO- group or R'-O-CO- group, wherein R and R' each shows an organic group, at a molecular end, and OH ends occupy less than 50% of the whole end groups,
2) The sum of the residual amounts of an end modifier and an acid anhydride of the end modifier is 20 ppm or less,
3) A ratio of a weight average molecular weight Mw to a number average molecular weight Mn, in terms of a polystyrene measured by gel permeation chromatography: Mw/Mn is 1.45 or less, and
4) A ratio of a viscosity average molecular weight Mv calculated by the following equation to a number average molecular weight Mn' calculated from the number of molecular ends: Mv/Mn' is 1.40 or less,

$$\eta_{sp}/C=[\eta]\times(1+0.28\eta_{sp})$$

$$[\eta]=1.23\times10^{-4}\times Mv^{0.83}$$

in the above equations, $\eta_{sp}$ is a specific viscosity measured, at 20°C with respect to a methylene chloride solution of a polycarbonate resin, C is a polycarbonate resin concentration of the methylene chloride solution, and C=0.6 g/dl.

**6.** The polycarbonate resin as claimed in claim 4 or 5, **characterized in that** Mv/Mn' is 1.30 or less, and OH groups occupy less than 40% of the whole end groups.

**7.** The polycarbonate resin as claimed in claim 6, **characterized in that** Mv/Mn' is 1.20 or less, and OH groups occupy less than 30% of the whole end groups.

**8.** The polycarbonate resin as claimed in claim 1 or 4, **characterized in that** the viscosity average molecular weight Mv is from 8,000 to 100,000.

[FIG. 1]

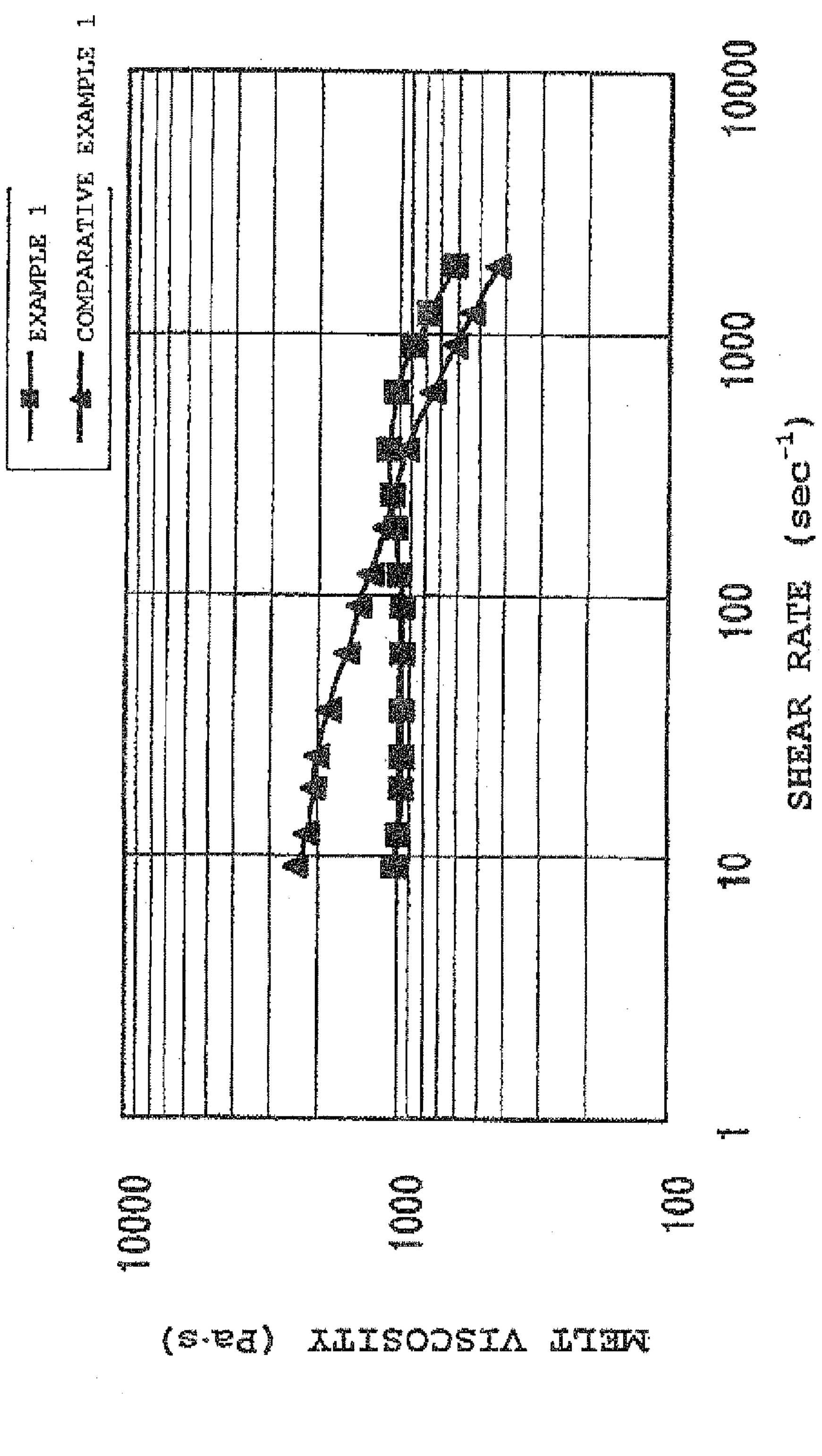
EXAMPLE 1
COMPARATIVE EXAMPLE 1
MELT VISCOSITY (Pa·s)
10000
1000
100
1
10
100
1000
10000
SHEAR RATE (sec-1)

[FIG. 2]

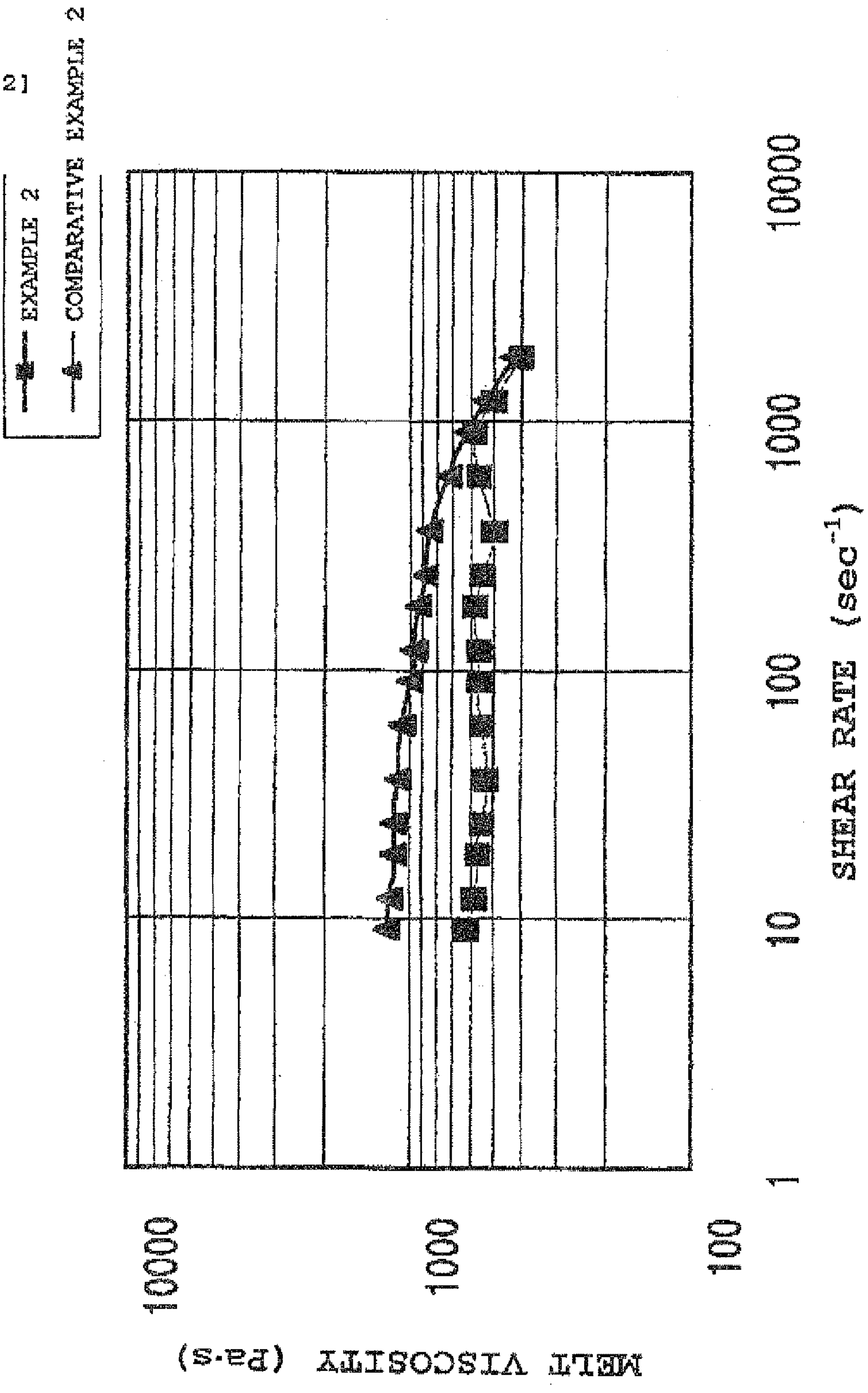
EXAMPLE 2
COMPARATIVE EXAMPLE 2
MELT VISCOSITY (Pa·s)
10000
1000
100
SHEAR RATE (sec$^{-1}$)
1
10
100
1000
10000

[FIG. 3]

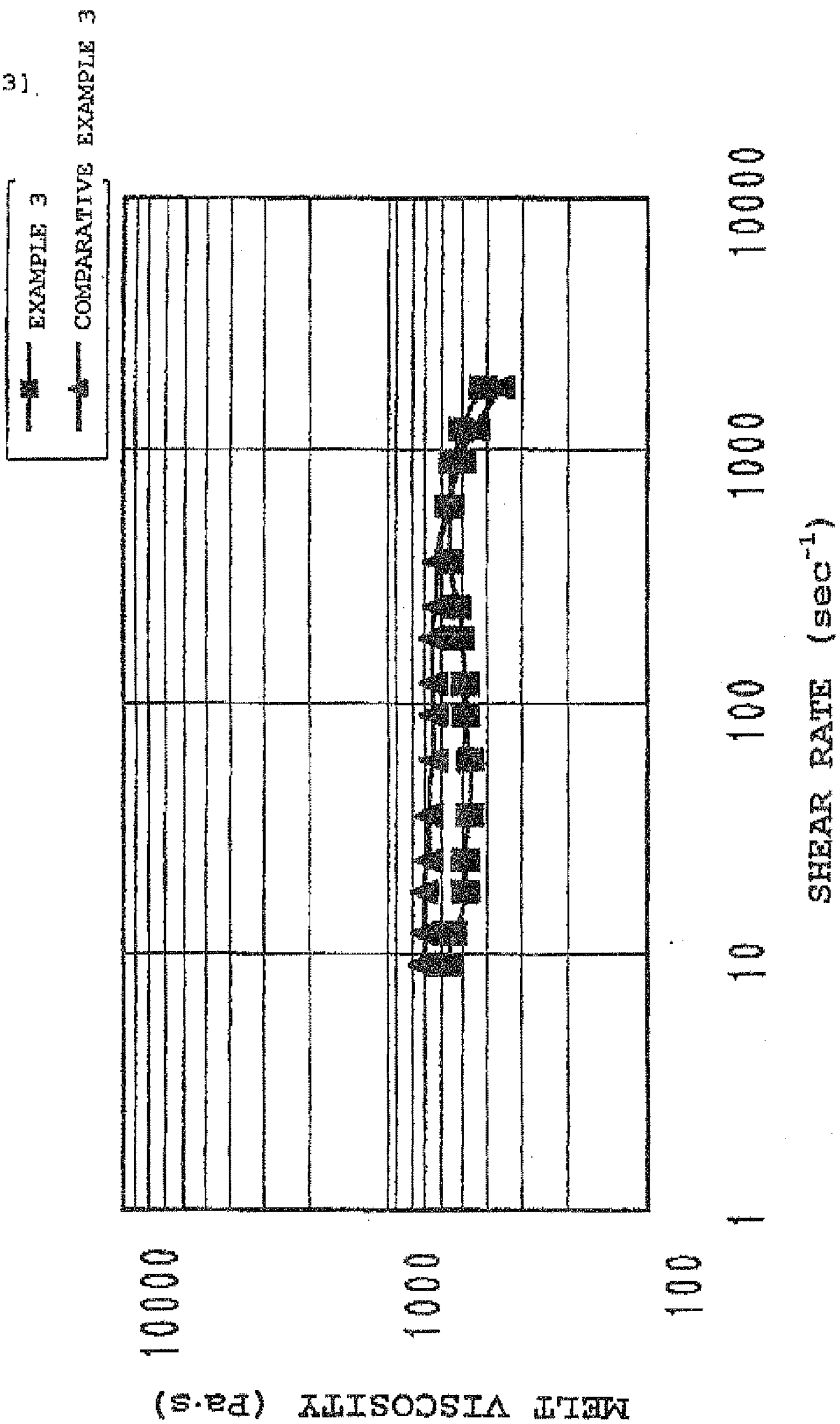
EXAMPLE 3
COMPARATIVE EXAMPLE 3
MELT VISCOSITY (Pa·s)
10000
1000
100
SHEAR RATE (sec$^{-1}$)
1
10
100
1000
10000

[FIG. 4]

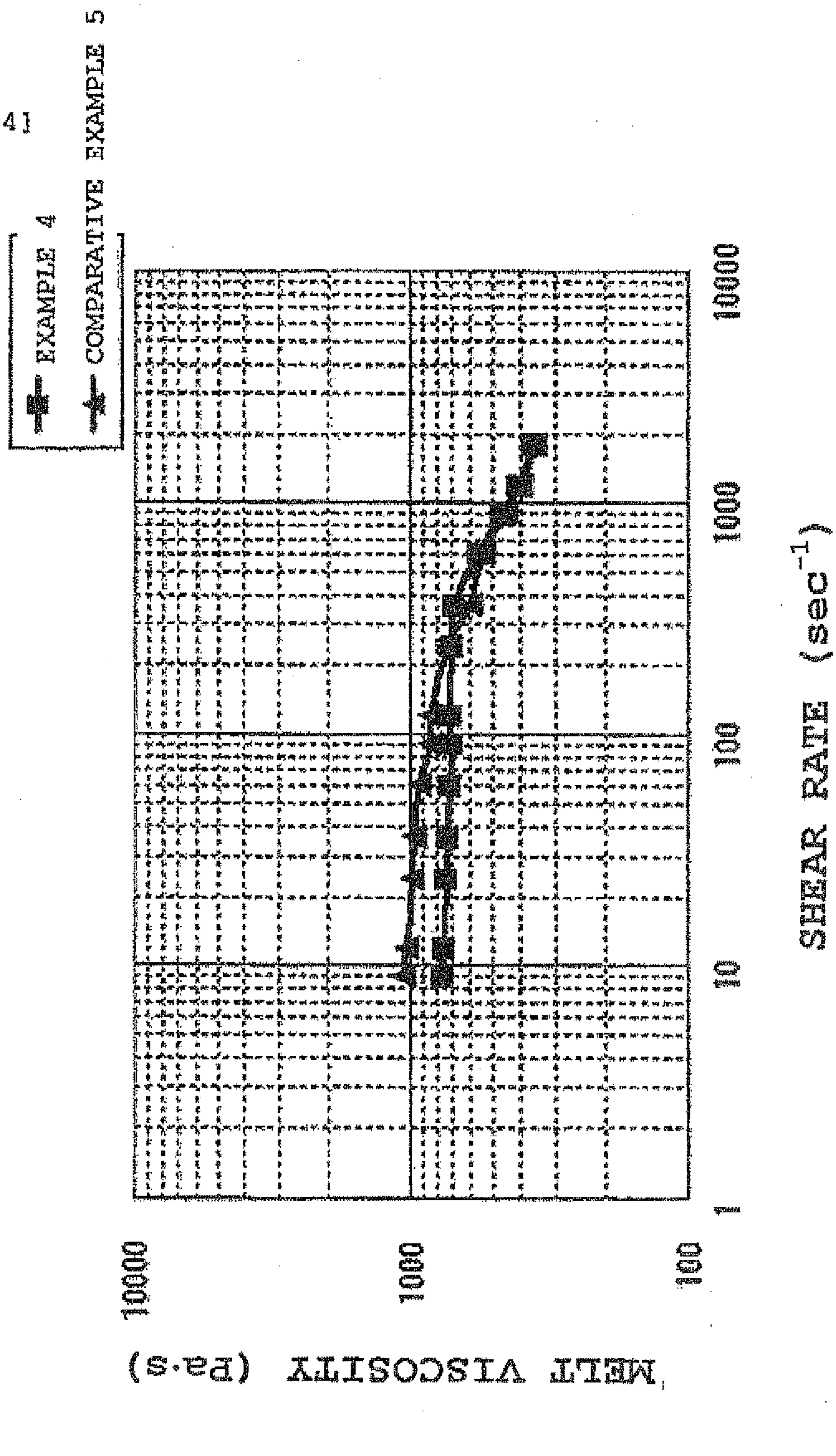
EXAMPLE 4
COMPARATIVE EXAMPLE 5
10000
1000
100
1
10
100
1000
10000
MELT VISCOSITY (Pa·s)
SHEAR RATE (sec$^{-1}$)

**INTERNATIONAL SEARCH REPORT**

International application No.
PCT/JP2007/058466

A. CLASSIFICATION OF SUBJECT MATTER
*C08G64/06*(2006.01)i

According to International Patent Classification (IPC) or to both national classification and IPC

B. FIELDS SEARCHED

Minimum documentation searched (classification system followed by classification symbols)
C08G64/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| X | JP 3720687 B (Mitsubishi Chemical Corp.), 16 September, 2005 (16.09.05), Claims; examples 4, 5 (Family: none) | 1-8 |
| X | JP 2004-346025 A (Mitsubishi Chemical Corp.), 09 December, 2004 (09.12.04), Claims; preparation example 1 (Family: none) | 1-8 |
| X | JP 2004-240290 A (Mitsubishi Chemical Corp.), 26 August, 2004 (26.08.04), Claims; preparation examples 1, 2 (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 May, 2007 (15.05.07) | 22 May, 2007 (22.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/058466

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-192759 A (Mitsubishi Engineering-Plastics Corp.), 08 July, 2004 (08.07.04), Claims (Family: none) | 1-8 |
| A | JP 2004-107420 A (National Institute of Advanced Industrial Science and Technology), 08 April, 2004 (08.04.04), Claims (Family: none) | 1-8 |
| A | JP 9-183836 A (Teijin Chemicals Ltd.), 15 July, 1997 (15.07.97), Example 4 (Family: none) | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3720687 B
- JP 3726618 B
- US 4982014 A
- US 3028365 A
- US 2999835 A
- US 3148172 A
- US 3275601 A
- US 2991273 A
- US 3271367 A
- US 3062781 A
- US 2970131 A
- US 2999846 A
- DE 1570703
- DE 2063050
- DE 2063052
- DE 2211956
- FR 1561518
- US 3269985 A
- US 3437639 A
- US 3804722 A
- US 3428600 A
- JP 2006116905 A
- JP 2007092112 A